# EUROPEAN PATENT APPLICATION

(11) **EP 3 090 897 A1**
(43) Date of publication of application: **09.11.2016**
(21) Application number: 16460023.1
(22) Date of filing: 12.04.2016
(51) Int. Cl.: B60N 3/04, B60R 13/01, A47G 27/02, A47L 23/22, B32B 11/00, B32B 15/00

(54) **LAYERED CAR MAT**

(30) Priority: 14.04.2015 PL 41198715
(71) Applicant: Steffens, Markus, 21029 Hamburg (DE)
(72) Inventor: Steffens, Markus, 21029 Hamburg (DE)
(74) Representative: Czabajski, Jacek

(57) **Abstract**

A layered car mat contains at least three layers. The upper and lower layers have the form of plates (1,2) made of semi-rigid material and both plates are joined to each other by a binding layer. Preferably the binding layer (3) is a bituminous layer containing on at least one surface an adhesive layer. Preferably the upper plate (1) has a thickness of 0,3 mm to 1 mm, the lower plate (2) has a thickness of 0,3 mm to 1,0 mm, while the thickness of the binding layer (3) amounts from 0,3 mm to 2 mm. Preferably the binding layer (3) contains on at least one surface a layer of aluminum foil (4), where the aluminum foil (4) containing on its surface an adhesive layer. Preferably the external surface of the upper plate (1) of semi-rigid material contains a surface layer (5). Preferably the surface layer (5) is perforated. Preferably the surface layer (5) contains holes (6).

## Description

The subject of the invention is a layered car mat. A solution according to the invention is applicable in the automotive industry as a means of protection of the car floor against dirt and wear, making possible shaping the car mat according to the form of the car floor surface. The mat according to the invention is applicable mainly to passenger cars, including sports cars, as well as to off-road vehicles and trucks, and is intended for all year use.

A number of solutions concerning layered car mats are known.

Known solution is presented in a European patent application, the publication number EP 2 314 443, which concerns a method for manufacturing an anti-slip rolling surface in a vehicle body structure. Said solution presents a multilayer structure including: an upper perforated metal plate, contained a number of holes, an intermediate layer of thermoplastic, and structural members of the vehicle body. The upper perforated plate is thermally welded to the lower structural member by means of the thermoplastic intermediate layer.

Another solution known from a European patent application, the publication number EP 1 435 411, has the form of an anti-slip metal plate structure, containing a number of anti-slip protrusions jutting out. The metal plate is made of stainless steel or another equivalent material. The anti-slip protrusions are made by punching. Each anti-slip protrusion is inclined at an angle of 45 degrees to the metal plate. Both sides of the protrusion are symmetrically curved, making thus a form of a flat leaf.

A further solution known from a Korean patent application KR20120134899 presents a vehicle mat composed of an upper and lower layer. The mat has numerous holes on the top. It has the upper surface made of a carbon material and the lower surface made of an elastic material. Anti-slip protrusions are made on the bottom surface of the lower layer.

Next known solution is presented in the patent application number WO 2004/022385, which concerns a car mat containing a fiber optic lighting. The mat is composed of three layers and one electrode, the layers having been made of different materials and glued together with fusible glue. The upper layer may be made of textiles or press-formed from aluminium, it also may contain many forms preventing foot sliding. The intermediate layer serves as a complement and is made of plastic. The bottom surface of the intermediate layer makes a base for mounting fiber optic cables.

The basic purpose of this invention is to realize an elastic mat as a car floor carpet with a good adherence to the substrate, which will take the shape of the car floor and remember it. The car mat according to the invention will contain an external anti-slip surface. It turned out unexpectedly that the solution according to the invention makes it possible to manually form a car mat that retains the shape given despite the fact that none of the mat layers alone does not retain the shape given. At the same time it was experimentally found that the shaped mat does not show deformations and signs resulting from the manual shaping process.

According to the invention the layered car mat contains at least three layers. The mat is characterized in that its upper and lower layers are plates of semi-rigid material connected to each other by a binding layer. Owing to use of the binding layer the mat takes the shape of the floor surface and retains it with no tendency to deform by itself. The respective parts of the mat can be formed according to the floor surface shape.

In a favorable version of the invention embodiment the binding layer has the form of a bituminous layer containing an adhesive layer on at least one surface.

In another variant the binding layer is a rubber layer having an adhesive layer on at least one surface. The adhesive layer ensures durable joining of the binding layer to the upper or lower plate.

Favorably the upper plate has a thickness of 0,3 mm to 1 mm, the lower layer has a thickness of 0,3 mm to 1,0 mm, and the binding layer thickness amounts from 0,3 mm to 2 mm. In the favorable variant the mat thickness, including all the layers, amounts from 1,3 mm to 3,3 mm.

In a favorable aspect of the invention embodiment the binding layer contains on at least one surface a layer of aluminum foil, the aluminum foil having on its surface an adhesive layer.

Favorably the external surface of the upper plate of semi-rigid material contains a surface layer. The surface layer can be made of a woven plastic fabric, e.g. covered with carbon. In this patent specification a single or multilayer fabric woven of carbon fibers, saturated with a hardening epoxy resin, should be understood as carbon. Laminates of such type have found a wide use in the automobile industry for production of e.g. parts of car body.

Favorably the surface layer is perforated, owing to which the mat gains anti-slip properties. That solution ensures stability of the external surface of the mat.

In a favorable variant the upper layer has holes.

In a favorable aspect of the invention embodiment the upper plate and lower plate are made of metal.

Favorably the upper plate and lower plate are made of aluminum. Owing to the softness of that material this is the most optimal solution.

In another variant the upper plate and lower plate are made of steel. Other metals, including titanium, may also be used.

Another variant of the solution has the upper plate and lower plate made of plastic.

Favorably the upper plate and lower plate are made of carbon.

In a favorable variant the upper plate, lower plate, surface layer and binding layer have at least one hole. The hole serves for draining water accumulating on the mat surface to a tank fastened to the mat from below.

Favorably the mat contains at least one means of fastening to the substrate and contains at least one locking means.

The object of the invention is presented in examples shown in the enclosed drawings, where the respective figures illustrate:
fig. 1 - the layered car mat in a perspective view.
fig. 2 - top view of the mat, showing the upper plate, lower plate and binding layer.
fig. 3 - top view of the mat showing the perforated surface, means for fastening to the substrate and locking means.
fig. 4 - view of the binding layer with a layer of aluminum foil.
fig. 5 - the layered car mat in a top view with the binding layer made visible.

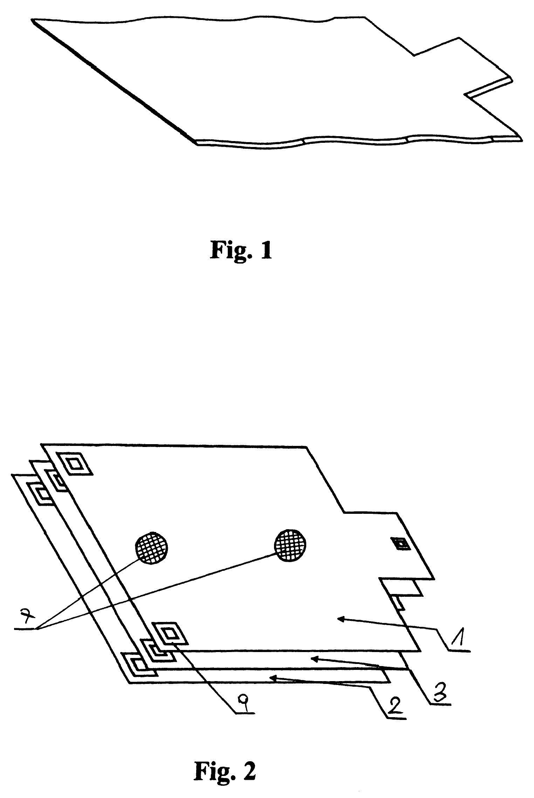

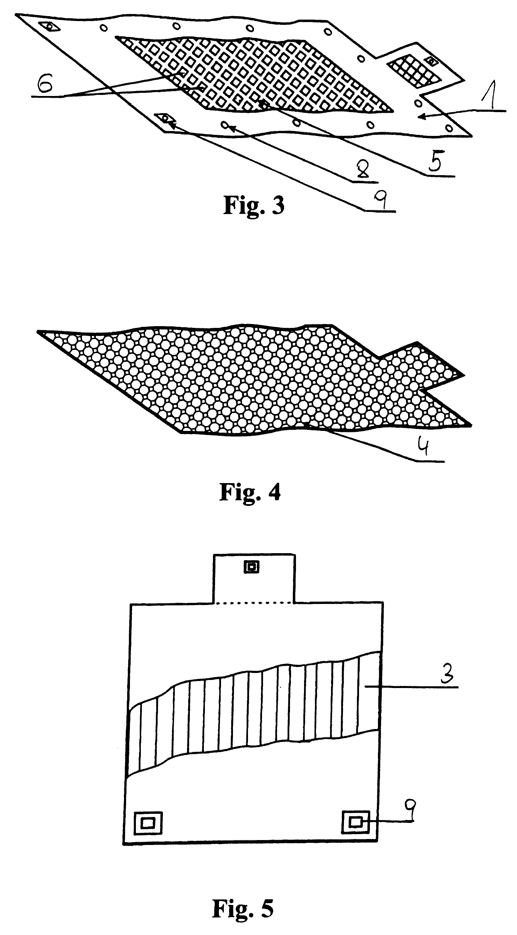

As shown in figure 2 the layered car mat contains three layers of material. Plates 1,2 made of semi-rigid material make the upper and lower layers, both plates having been joined together by the binding layer 3. The binding layer 3 is a bituminous layer containing on one surface an adhesive layer, which is illustrated in fig. 5. In this embodiment the upper plate 1 is 0,3 mm thick, the lower plate has a thickness of 0,3 mm or more, and the binding layer 3 is 1 mm thick.

As illustrated in the enclosed figure 4 the binding layer 3 has on one surface a layer of aluminum foil 4, the aluminum foil 4 containing on its surface an adhesive layer. In this embodiment the binding layer 3 is a sheet of bituminous material, containing on its surface a layer of aluminum foil covered with an adhesive layer and protected with a peel-off film. After removal of the peel-off film the adhesive layer makes it possible to glue the binding layer to the plate 1 or 2 and form a two-layer structure. A similar solution may be adopted in another embodiment on the other side of the binding layer, making possible gluing the binding layer to the other plate 1 or 2 and creating a durable three-layer mat.

The external surface of the upper plate 1 of semi-rigid material contains a surface layer 5, which is illustrated in figure 3. As illustrated in fig. 3 the surface layer 5 is perforated. The surface layer 5 contains holes 6.

In this embodiment the upper plate 1 and lower plate 2 are made of aluminum.

As shown in figure 2 the upper plate 1, lower plate 2, surface layer 5 and binding layer 3 have ports 7. The holes serve for draining water accumulating on the mat surface to a tank fastened to the mat from below. As shown in fig. 3 the mat contains means 8 of fastening to the substrate and locking means 9.

## Claims

1. Layered car mat containing at least three layers, **characterized in that** the upper and lower layers are plates (1,2) of semi-rigid material, both plates having been joined to each other by a binding layer (3).

2. Car mat according to claim 1, **characterized in that** the binding layer (3) is a bituminous layer containing on at least one surface an adhesive layer.

3. Car mat according to claim 1, **characterized in that** the binding layer (3) is a rubber layer containing on at least one surface an adhesive layer.

4. Car mat according to claim 1 or 2 or 3, **characterized in that** the upper plate (1) has a thickness of 0,3 mm to 1 mm, the lower plate (2) has a thickness of 0,3 mm to 1,0 mm, while the thickness of the binding layer (3) amounts from 0,3 mm to 2 mm.

5. Car mat according to claim 1, **characterized in that** the binding layer (3) contains on at least one surface a layer of aluminum foil (4), where the aluminum foil (4) containing on its surface an adhesive layer.

6. Car mat according to claim 1 or 4 or 5, **characterized in that** the external surface of the upper plate (1) of semi-rigid material contains a surface layer (5).

7. Car mat according to claim 6, **characterized in that** the surface layer (5) is perforated.

8. Car mat according to claim 6, **characterized in that** the surface layer (5) contains holes (6).

9. Car mat according to claim 1 or 4 or 5 or 7, **characterized in that** the upper plate (1) and lower plate (2) are made of metal.

10. Car mat according to claim 9, **characterized in that** the upper plate (1) and lower plate (2) are made of aluminum.

11. Car mat according to claim 9, **characterized in that** the upper plate (1) and lower plate (2) are made of steel.

12. Car mat according to Claim 1 or 4 or 5 or 7, **characterized in that** the upper plate (1) and lower plate (2) are made of plastic.

13. Car mat according to Claim 12, **characterized in that** the upper plate (1) and lower plate (2) are made of carbon.

14. Car mat according to one of claims from 1 to 13, **characterized in that** the upper plate (1), lower plate (2), surface layer (5) and binding layer (3) contain at least one hole (7).

15. Car mat according to one of claims 1 to 14, **characterized in that** the mat contains at least one fastening means (8) to the basis and contains at least one locking means (9).
